# EUROPEAN PATENT APPLICATION

(11) **EP 4 641 008 A1**
(43) Date of publication of application: **29.10.2025**
(21) Application number: 25169672.0
(22) Date of filing: 10.04.2025
(51) Int. Cl.: F02F 3/12

(54) **H11 AND H13 STEELS FOR PISTON APPLICATION**

(30) Priority: 23.04.2024 US 202463637492 P; 09.04.2025 US 202519174090
(71) Applicant: Cummins, Inc., Columbus, Indiana 47201 (US)
(72) Inventor: SAVAGE, Howard, Indiana (US); CHEN, Yong-Ching, Indiana (US); ZHOU, Jian, Indiana (US); WANG, Ben, Indiana (US); MA, Quancang, Indiana (US); McNULTY, Wiliam, Indiana (US); PIERCE, Dean, Tennessee (US); HAYNES, James, Tennessee (US); MURALIDHARAN, Govindarajan, Tennessee (US)
(74) Representative: Cleveland Scott York

(57) **Abstract**

A piston for an internal combustion engine comprising a piston body having a crown adjacent a skirt. Any of an outer crown surface of the crown, piston ring grooves in the crown, and/or the crown include a steel H11 alloy and/or a steel H13 alloy. The steel H11 or H13 material is applied in any technique such as a piston crown coating/cladding, fused overlay, powder cladding, welded on an outer crown surface of the crown, and/or included in the crown and/or skirt of a monolithic piston. The steel H11 or H13 material is applied with an additive manufacturing item, applied with a coating, buttering, or other surface modification to facilitate joining to the piston body. The application of the steel H11 or H13 material with a heat treatment to at least the piston crown creates an elevated temperature oxidation resistant high performance piston.

## Description

### Cross-Reference to Related Application:

The present application claims the benefit of the filing date of U.S. Provisional Application No. 63/637,492 filed on April 23, 2024, which is incorporated herein by reference.

### GOVERNMENT LICENSE RIGHTS

This invention was made with government support under CRADA No. NFE-19-07668 between Cummins, Inc. and UT-Battelle, LLC, management and operating contractor for Oak Ridge National Laboratory. The Government has certain rights in this invention.

### TECHINICAL FIELD

The present application relates generally to a piston for an internal combustion engine, and more particularly to at least a piston crown and in some embodiments a piston skirt piece that includes steel H11 or H13.

### BACKGROUND

Pistons for light power density applications can be made of aluminum or aluminum alloy material which is less expensive than other materials however the temperature limits are lower as compared to pistons made of other materials. Pistons for higher power density applications need to have more heat resistance because the temperatures in the combustion area are higher as compared to light power density applications. Many pistons in these higher power density applications are made of low alloy steel such as 4140 alloy that includes chromium-, molybdenum-, and manganese-containing low alloy steel or its variants. Some pistons used in higher power density applications have crowns that are made of a low alloy steel that is assembled with a piston skirt or body made of a micro alloy steel. These crowns lack sufficient high temperature strength and high temperature oxidation resistance for higher power density engines.

Pistons for higher power density applications are often designed with a piston cooling gallery to reduce the piston crown temperatures through forced convection cooling. During operation, cooling oil is contained in or sprayed into the piston cooling gallery to reduce the temperature of the surrounding metal body. However, oil deposits oftentimes accumulate on the inner walls thereby bounding the piston cooling galleries. As the oil deposits accumulate, the cooling effectiveness of the oil circulating therein diminishes. These oil deposits, also referred to as oil coking, in the piston cooling galleries, is generally associated with high thermal loads that can lead to failure of the piston as it is less thermally conductive and has increased thermal stresses.

Therefore, further contributions in this area of technology are needed to improve the durability of a piston.

### SUMMARY

A piston for an internal combustion engine includes a piston body having a crown joined to or monolithic with a skirt. In some embodiments, at least the crown of the piston includes a steel H11 and/or steel H13 alloy. The steel H11 alloy includes chromium, molybdenum, vanadium, and iron. The steel H13 alloy includes carbon, chromium, molybdenum, vanadium, iron, and smaller amounts of other alloying elements such as silicon and manganese. In some embodiments, the skirt includes the steel H11 and/or steel H13 alloy.

In one embodiment, the steel H11 and/or H13 materials are a piston crown coating, overlay, or cladding that is applied to a crown surface of the crown. In another embodiment, the steel H11 and/or H13 materials are welded on the crown surface of the crown. The steel H11 and/or H13 can be a fused overlay, cladding, powder cladding, and/or welded on the crown surface.

In another embodiment, the steel H11 and/or H13 materials are used to form or make a monolithic piston that includes the crown and the skirt formed at least in part from the steel H11 and/or H13 materials.

The piston that includes the steel H11 and/or H13 materials for at least the piston crown results in an elevated temperature oxidation resistant high performance piston. The piston that includes the steel H11 and/or H13 materials for at least the piston crown provides for higher power density engines for diesel and alternative fuels.

Related methodology for making a piston comprising a piston body having a crown joined to or monolithic with a skirt wherein steel H11 and/or steel H13 alloy is applied to at least the crown and in some embodiments the skirt as well. In some embodiments, the steel H11 and/or steel H13 alloy is used to make the crown and/or the skirt of the piston body.

This summary is provided to introduce a selection of concepts that are further described below in the illustrative embodiments. This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

### BRIEF DESCRIPTION OF THE DRAWINGS

The concepts described herein are illustrative by way of example and not by way of limitation in the accompanying figures. For simplicity and clarity of illustration, elements illustrated in the figures are not necessarily drawn to scale. Where considered appropriate, references labels have been repeated among the figures to indicate corresponding or analogous elements.
FIG. 1 is a side perspective view of an exemplary piston of the present disclosure; and
FIG. 2 is a cross-sectional view of the exemplary piston shown in FIG. 1.

### DETAILED DESCRIPTION OF ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended, any alterations and further modifications in the illustrated embodiments, and any further applications of the principles of the invention as illustrated therein as would normally occur to one skilled in the art to which the invention relates are contemplated herein.

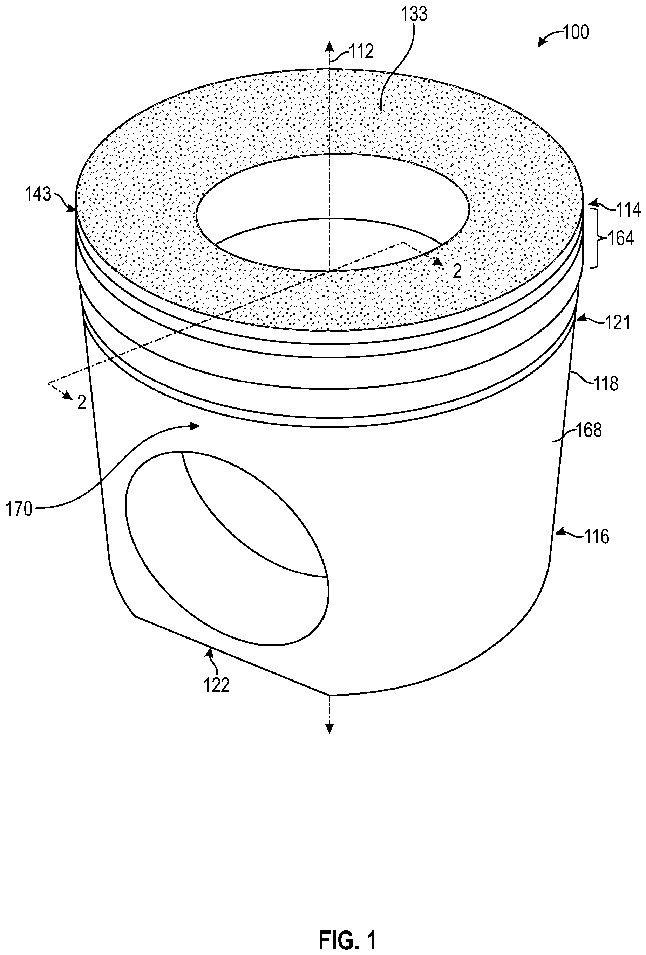

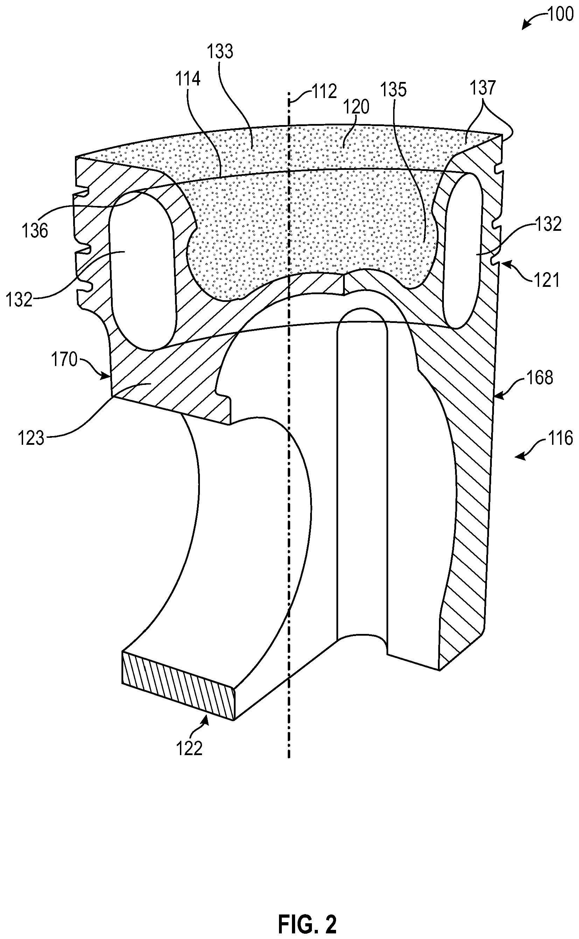

Turning now to the present application with reference to FIGS. 1 and 2, is an exemplary piston for use in high temperature and/or high pressure environments such as an internal combustion engine. While an exemplary piston is shown in FIGS. 1 and 2, the exemplary components illustrated in the figures are not intended to be limiting. Indeed, additional or alternative components and/or implementations may be used.

In the exemplary embodiment, the piston 100 includes a crown 114 and a skirt part 116. In one or more embodiments, the crown 114 can be attached to, affixed to, or manufactured with the skirt part 116. For example, in one or more embodiments, the crown 114 can be welded to the skirt part 116. In some other embodiments, the crown 114 can be manufactured in a mold that is also used for manufacturing the skirt part 116.

The piston 100 includes a sidewall 118 which is generally cylindrical and extends along the longitudinal axis 112 from an end 143 of the piston 100 to a first end 121 of the skirt part 116, and from the first end 121 to a second end 122 of the skirt part 116. The second end 122 of the skirt part 116 is structured to allow for engagement of a connecting rod with the piston 100. The skirt part 116 defines a wristpin bore in which a wristpin (not shown) is received and retained to engage the connecting rod with the wristpin. An outer peripheral surface of the crown 114 is formed with a set of ring grooves 164. During engine operation, rings positioned in the piston ring grooves 164 prevent blow-by and undesirable burning of lubrication oil. In other embodiments, the piston 100 includes a second set of ring grooves near the second end 122 of the skirt part 116.

The sidewall 118 is formed with opposing sidewall portions 168 separated from one another by intervening sidewalls 170. For example, there are two opposing side wall sections 168 and two opposing sidewalls 170. Relative to the longitudinal axis 112, the portions 168 of the sidewall 118 have approximately a same radius as the crown 114. The sidewalls 170 can minimize both a mass of the piston and a contact area of the sidewall 118 against a bore of a cylinder in which the piston is disposed. The sidewalls 170 run longitudinally in the sidewall 118 below the ring grooves 164.

The crown 114 has an end surface 120 shaped to define a combustion chamber with an end surface of an opposing piston in the opposed-piston engine. In one or more embodiments, the end surface 120 can be a concave surface, a convex surface, a flat surface, or a combination thereof. The end surface 120 includes a depression 135 extending across the crown 114. The depression 135 is configured to align with a location of a respective fuel injector along the cylinder bore in which the piston 100 is disposed at a particular position of the piston 100 within the cylinder bore. In other embodiments, the piston 100 does not include the depression 135.

In one or more embodiments, the end surface 120 of the crown 114 can be formed of one or more materials. Some exemplary types of materials include steel, a steel alloy, titanium, a titanium alloy, aluminum, an aluminum alloy, and/or silicon to name a few nonlimiting materials. In one or more embodiments, the entire crown 114 can be formed of material such as steel or a steel alloy. In some embodiments, the entire crown 114 can be formed of a steel H11 alloy and/or a steel H13 alloy. The steel H11 alloy includes carbon, chromium, molybdenum, vanadium, iron, and at least one of silicon and manganese. The steel H13 alloy includes carbon, chromium, molybdenum, vanadium, iron, and at least one of silicon and manganese. Beneficially, the materials for forming the end surface 120 of the crown 114 can include aluminum and/or silicon for enhanced elevated temperature oxidation resistance. In some embodiments, the steel H11 and/or steel H13 alloy includes a composition as described in ASTM A681.

In some embodiments, the steel H11 alloy and/or steel H13 alloy can include sulfur in the composition which can be a concern for fatigue resistance of the piston 100 if the amount of sulfur is too high. For example, a large amount sulfur becomes a concern for fatigue strength; but a small or low amount of sulfur benefits machinability of the piston 100 without impairing any fatigue properties.

As shown in FIG. 2, the skirt part 116 includes an interior wall 123 that partially defines a cooling gallery 132. An outer peripheral portion of an under surface 136 of the crown 114 defines the remainder of the cooling gallery 132 in conjunction with the interior wall 123. The cooling gallery 132 serves as a conduit for cooling fluids such as oil to cool the piston 100.

An outer crown surface 137 of the crown 114 includes the end surface 120 and a portion of the sidewall 118 that spans between the end surface 120 and the first set of ring grooves 164 is referenced for application of a steel H11 alloy and/or a steel H13 alloy in one or more techniques described below. In any embodiment, the first set of ring grooves 164 can also include application of a steel H11 alloy and/or a steel H13 alloy in one or more techniques described below. The steel H11 alloy and/or the steel H13 alloy can be applied to the skirt part 116 using similar techniques or different techniques as the outer crown surface 137.

In one embodiment, the steel H11 alloy and/or the steel H13 alloy can be applied to the outer crown surface 137 as a piston crown coating 133 on the outer crown surface 137. In one refinement, the steel H11 alloy and/or the steel H13 alloy is applied to the outer crown surface 137 as a coating by a process such as thermal spraying with or without a post coating fusion enhancing process. In one or more embodiments, the outer crown surface 137 includes a thermal barrier coating (TBC) made of the steel H11 alloy and/or the steel H13 alloy. These treatments to the outer crown surface 137 form an elevated temperature oxidation resistant high performance piston.

In one refinement, the steel H11 alloy and/or the steel H13 alloy is applied to the outer crown surface 137 as a fused overlay. In one instance the steel H11 alloy and/or the steel H13 alloy is applied to the outer crown surface 137 by a weld overlay. These treatments to the outer crown surface 137 form an elevated temperature oxidation resistant high performance piston.

In one embodiment, the steel H11 alloy and/or the steel H13 alloy can be applied to the outer crown surface 137 as a cladding on the outer crown surface 137. In one refinement, the steel H11 alloy and/or the steel H13 alloy is applied to the outer crown surface 137 by a cladding process such as by explosive cladding or by hot isostatic pressed powder cladding. In another refinement, the steel H11 alloy and/or the steel H13 alloy is applied to the outer crown surface 137 as a powder cladding. These treatments to the outer crown surface 137 form an elevated temperature oxidation resistant high performance piston.

In one embodiment, the steel H11 alloy and/or the steel H13 alloy can be applied to the outer crown surface 137 by welding onto the outer crown surface 137. Another type of heat treatment applied to the outer crown surface 137 includes austenitizing and tempering. The industry standard austenitizing temperatures for steel H11 are described in SAE AMS2759/1 table 2B and SAE AMS2759/2 table 2B. One technique to austenitizing or hardening the steel H11 alloy to the outer crown surface 137 includes heating the steel H11 alloy to 500° F (260° C), then step-heat to 1500° F (815° C) and hold for 15 minutes, followed by step-heating to 1850° F (1010° C) and holding it for 30 minutes at that temperature. These heat treatments to the outer crown surface 137 form an elevated temperature oxidation resistant high performance piston 100.

Generically, grain size for general steels is defined as fine grain size as 5 or finer. One general advantage of finer grain size is improved toughness of the material. There can also be Hall-Petch grain size advantages to strength. Some advantages of coarser grain size are improved resistance to creep at elevated temperatures and improved resistance to recrystallization. The steel H11 alloy and/or the steel H13 alloy are specially processed to have either a few/columnar grains or to be single crystal (one grain) to reduce/avoid the disadvantages of grain boundaries at elevated temperatures. Increasing grain size has potential advantages to hardenability; coarser prior austenite grains have greater hardenability and greater depth of hardening in the material than fine grained material. A thicker section can be fully hardened in a coarse austenite grain structure rather than for a fine austenite grain structure. Alternatively, with a coarser austenite grain size in the same section, a milder quench could be used with less distortion and less risk of quench cracking than for the finer austenite grain size. Increasing grain size by higher temperature austenitization enables better solutionizing of alloying elements, larger prior austenite grains with higher hardenability and promotes finer carbides with better resistance to softening in elevated temperature application.

Coarser grain size is a matter of degree. Different types of particles/precipitates have different abilities to control grain sizes at different temperatures. With the wrong kind of particles, the grain boundaries may "run away" from the particles at elevated temperature and result in detrimentally excessively coarse grain sizes. However, with the right kind of particles the particles may allow moderately larger grain sizes to form without the formation of detrimentally excessively coarse grain sizes.

In one instance the crown 114 of the steel H11 alloy and/or the steel H13 alloy is welded/bonded to the skirt part 116 of the same or a different alloy. In one instance the steel H11 and/or steel H13 alloy crown preform is a forging formed by a manufacturing process involving the shaping of the metal alloy using localized compressive forces to create the crown 114. In one instance the steel H11 and/or steel H13 alloy crown preform and/or the skirt part 116 is an additive manufactured item.

In one instance, the steel H11 and/or steel H13 alloy crown preform is brazed or diffusion bonded to the skirt part 116. In one instance, the piston 100 including the crown 114 and the skirt part 116 is made of the steel H11 and/or steel H13 alloy.

In any of the above embodiments, the heat treatments of the steel H11 and/or steel H13 alloy crown 114 provide exceptional strength and dimensional stability at peak power operating conditions of the piston 100.

In any of these manufacturing processes, the outer crown surface 137 and in some embodiments the piston ring groove 164 are surfaced with the steel H11 alloy and/or the steel H13 alloy.

In one instance, a layer thickness of the applied steel H11 and/or steel H13 alloy layer is optimized to minimize the piston oil gallery temperature and risk of oil coking in the cooling gallery 132.

In one instance the crown 114 of the steel H11 and/or steel H13 alloy is treated with a coating, buttering, and/or other surface modification to facilitate joining to the skirt part 116. In one instance, the skirt part 116 is treated with a coating, buttering, and/or other surface modification to facilitate joining to the crown 114 of the steel H11 and/or steel H13 alloy and/or application of the crown alloy surfacing. Buttering is a weld overlay of a highly weldable material on a challenging to weld material to facilitate later ease of welding to the butter layer with little risk of problems with the underlying challenging to weld material.

As is evident from the figures and text presented above, a variety of aspects of the present disclosure are contemplated.

Various aspects of the present application are contemplated. According to one aspect, a piston for an internal combustion engine, the piston comprising: a piston body having a crown adjacent a skirt, wherein the crown includes an outer crown surface, wherein the outer crown surface includes a steel H11 alloy and/or a steel H13 alloy for an enhanced elevated temperature oxidation resistance of at least the crown.

In one embodiment, wherein the steel H11 alloy and/or the steel H13 alloy includes aluminum and/or silicon.

In one embodiment, wherein the steel H11 alloy includes one or more of carbon, chromium, molybdenum, vanadium, iron, and at least one of silicon and manganese.

In one embodiment, wherein the steel H13 alloy includes one or more of carbon, chromium, molybdenum, vanadium, iron, and at least one of silicon, sulfur, or manganese.

In one embodiment, wherein the skirt includes the steel H11 alloy and/or steel H13 alloy.

In one embodiment, wherein the crown and the skirt are monolithic.

In one embodiment, wherein the piston is an elevated temperature oxidation resistant high performance piston.

In one embodiment, wherein the internal combustion engine is a high power density engine.

In one embodiment, wherein the crown includes the steel H11 alloy and/or the steel H13 alloy.

In one embodiment, wherein the crown includes a set of ring grooves that include the steel H11 alloy and/or the steel H13 alloy.

In one embodiment, wherein the skirt is made of a different alloy than the crown.

According to another aspect, a method of manufacturing a piston for an internal combustion engine, the method comprising: providing a piston having a piston body, the piston body includes a crown adjacent a skirt, wherein the crown includes an outer crown surface; and applying a steel H11 alloy and/or a steel H13 alloy to the outer crown surface.

In one embodiment, wherein the applying the steel H11 alloy and/or the steel H13 alloy includes a cladding process including an explosive cladding, a hot isostatic pressed powder cladding, or a powder cladding to form a cladding.

In one embodiment, wherein the applying the steel H11 alloy and/or the steel H13 alloy includes thermal spraying the steel H11 alloy and/or the steel H13 alloy to form a crown coating, an overlay, or a fused overlay.

In one embodiment, wherein the applying the steel H11 alloy and/or the steel H13 alloy includes welding the steel H11 alloy and/or the steel H13 alloy to the outer crown surface of the crown.

In one embodiment, wherein the applying the steel H11 alloy and/or the steel H13 alloy includes applying a heat treatment temperature of greater than 260° C to the steel H11 alloy and/or the steel H13 alloy and then heating to 816° C for 15 minutes the steel H11 alloy and/or the steel H13 alloy.

In one embodiment, further comprising: after heating to 816° C, then heating to 1010° C for 30 minutes the steel H11 alloy and/or the steel H13 alloy.

In one embodiment, wherein the skirt is made of a different alloy than the crown.

In one embodiment, wherein the applying the steel H11 alloy and/or the steel H13 alloy includes diffusion bonding the crown to the skirt.

In one embodiment, wherein the applying the steel H11 alloy and/or the steel H13 alloy includes an additive manufactured item of and/or additional manufacturing process application of the steel H11 alloy and/or the steel H13 alloy.

In the above description, certain relative terms may be used such as "up," "down," "upper," "lower," "horizontal," "vertical," "left," "right," "proximal," "distal," and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object.

Reference throughout this specification to "one embodiment," "an embodiment," or similar language means that a particular feature, structure, or characteristic described in connection with the embodiment is included in at least one embodiment of the present disclosure. Appearances of the phrases "in one embodiment," "in an embodiment," and similar language throughout this specification may, but do not necessarily, all refer to the same embodiment. Similarly, the use of the term "implementation" means an implementation having a particular feature, structure, or characteristic described in connection with one or more embodiments of the present disclosure, however, absent an express correlation to indicate otherwise, an implementation may be associated with one or more embodiments.

The described features, structures, advantages, and/or characteristics of the subject matter of the present disclosure may be combined in any suitable manner in one or more embodiments and/or implementations. In the following description, numerous specific details are provided to impart a thorough understanding of embodiments of the subject matter of the present disclosure. One skilled in the relevant art will recognize that the subject matter of the present disclosure may be practiced without one or more of the specific features, details, components, materials, and/or methods of a particular embodiment or implementation. In some instances, the benefit of simplicity may provide operational and economic benefits and exclusion of certain elements described herein is contemplated as within the scope of the invention herein by the inventors to achieve such benefits. In other instances, additional features and advantages may be recognized in certain embodiments and/or implementations that may not be present in all embodiments or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

The present subject matter may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A piston for an internal combustion engine, the piston comprising:
a piston body having a crown adjacent a skirt, wherein the crown includes an outer crown surface, wherein the outer crown surface includes a steel H11 alloy and/or a steel H13 alloy for an enhanced elevated temperature oxidation resistance of at least the crown.

2. The piston of claim 1, wherein the steel H11 alloy and/or the steel H13 alloy includes aluminum and/or silicon, or
wherein the steel H11 alloy includes one or more of carbon, chromium, molybdenum, vanadium, iron, and at least one of silicon and manganese, or
wherein the steel H13 alloy includes one or more of carbon, chromium, molybdenum, vanadium, iron, and at least one of silicon, sulfur, or manganese.

3. The piston of claim 1, wherein the skirt includes the steel H11 alloy and/or steel H13 alloy, and/or wherein the crown and the skirt are monolithic.

4. The piston of claim 1, wherein the piston is an elevated temperature oxidation resistant high performance piston.

5. The piston of claim 1, wherein the internal combustion engine is a high power density engine.

6. The piston of claim 1, wherein the crown includes the steel H11 alloy and/or the steel H13 alloy.

7. The piston of claim 6, wherein the crown includes a set of ring grooves that include the steel H11 alloy and/or the steel H13 alloy.

8. A method of manufacturing a piston for an internal combustion engine, the method comprising:
providing a piston having a piston body, the piston body includes a crown adjacent a skirt, wherein the crown includes an outer crown surface; and
applying a steel H11 alloy and/or a steel H13 alloy to the outer crown surface.

9. The method of claim 8, wherein the applying the steel H11 alloy and/or the steel H13 alloy includes a cladding process including an explosive cladding, a hot isostatic pressed powder cladding, or a powder cladding to form a cladding.

10. The method of claim 8, wherein the applying the steel H11 alloy and/or the steel H13 alloy includes thermal spraying the steel H11 alloy and/or the steel H13 alloy to form a crown coating, an overlay, or a fused overlay.

11. The method of claim 8, wherein the applying the steel H11 alloy and/or the steel H13 alloy includes welding the steel H11 alloy and/or the steel H13 alloy to the outer crown surface of the crown.

12. The method of claim 8, wherein the applying the steel H11 alloy and/or the steel H13 alloy includes applying a heat treatment temperature of greater than 260° C to the steel H11 alloy and/or the steel H13 alloy and then heating to 816° C for 15 minutes the steel H11 alloy and/or the steel H13 alloy.

13. The method of claim 12, further comprising: after heating to 1500° F, then heating to 1010° C for 30 minutes the steel H11 alloy and/or the steel H13 alloy.

14. The piston of claim 1, or the method of claim 8, wherein the skirt is made of a different alloy than the crown.

15. The method of claim 8, wherein the applying the steel H11 alloy and/or the steel H13 alloy includes:-
(a) diffusion bonding the crown to the skirt, or
(b) an additive manufactured item of and/or additional manufacturing process application of the steel H11 alloy and/or the steel H13 alloy.
